# EUROPEAN PATENT APPLICATION

(11) **EP 2 738 696 A1**
(43) Date of publication of application: **04.06.2014**
(21) Application number: 13194794.7
(22) Date of filing: 28.11.2013
(51) Int. Cl.: G06F 17/30

(54) **Methods for providing web search suggestions and devices thereof**

(30) Priority: 29.11.2012 US 201261731205 P
(71) Applicant: Usablenet Inc., New York, NY 10010 (US)
(72) Inventor: Scoda, Enrico, 33035 Martignacco (IT)
(74) Representative: Gervasi, Gemma

(57) **Abstract**

A method, non-transitory computer readable medium, and programmed device that use local storage in a browser to provide one or more web search suggestions includes receiving at least a partial entry in field of a web page. Any responsive web search suggestion entries to the received at least a partial entry are provided in the field of the web page from a web search suggestion file stored in a web browser of the client computing device.

## Description

### FIELD

This technology generally relates to methods and devices for assisting web searching and, more particularly, to methods for using local storage in a browser at a client computing device for providing one or more web search suggestions and devices thereof.

### BACKGROUND

Web sites improve the user experience around "search item" functionalities by predicting a word or a phrase when a user at a client computing device starts typing. By way of example, when the user at the client computing device starts typing the beginning of the word, such as "New" for a city, an airport, or a rail station, then the Web content provider could provide suggestions, such as "New York" and "New Heaven". In another example, when the user at the client computing device starts typing "soc", then the Web content provider could provide suggestions, such as "socks 15" and "soccer 3" where the numbers indicate the number of items in the catalog including the suggested words.

This search suggestion functionality is a common user interface feature that is usually implemented with Ajax technology at the client computing device. When a user at the client computing device types in a text field, the JavaScript engine in the client computing devices sends a request to a Web content provider. This Web content provider returns a data set, such as JSON data set, that the JavaScript at the client computing device will use to display results as a list of suggestions.

When the internet connection for the client computing device is fast, i.e. low latency, this search suggestion functionality works pretty well. However when the internet connection for the client computing device is slow or intermittent, such as when browsing the Web from a mobile computing device, then the performance of this search suggestion service often deteriorates.

### SUMMARY

A method using local storage in a browser to provide one or more web search suggestions includes receiving by a client computing device at least a partial entry in field of a web page. Any responsive web search suggestion entries to the received at least a partial entry are provided by the client computing device in the field of the web page from a web search suggestion file stored in a web browser of the client computing device.

A non-transitory computer readable medium having stored thereon instructions for providing one or more web search suggestions comprising machine executable code which when executed by at least one processor, causes the processor to perform steps comprising receiving at least a partial entry in field of a web page. Any responsive web search suggestion entries to the received at least a partial entry are provided in the field of the web page from a web search suggestion file stored in a web browser of the client computing device.

A computing device includes a memory coupled to one or more processors which are configured to execute programmed instructions stored in the memory including receiving at least a partial entry in field of a web page. Any responsive web search suggestion entries to the received at least a partial entry are provided in the field of the web page from a web search suggestion file stored in a web browser of a client computing device.

This technology provides a number of advantages including providing methods, non-transitory computer readable medium, and devices that more quickly and effectively provide web search suggestions. In particular, with for example HTML5, this technology can utilize local storage within a browser to store a web search suggestion file for use in providing web search suggestions. As a result, in environments where the internet connection is slower, i.e. has higher latency, this technology is able to more quickly provide web search suggestions.

### BRIEF DESCRIPTION OF THE DRAWINGS

FIG. 1 is a block diagram of an environment with a client computing device which uses local storage in a browser to facilitate providing web search suggestions
FIG. 2 is a flow chart of an example of a method for using local storage in a browser to provide one or more web search suggestions;
FIG. 3A is a screen shot of an example of a web page for ACME airlines with two entry fields for a flight reservation; and
FIG. 3B is a screen shot of an example of web search suggestions provided from the web search suggestion file in local storage in the browser of the client computing device.

### DETAILED DESCRIPTION

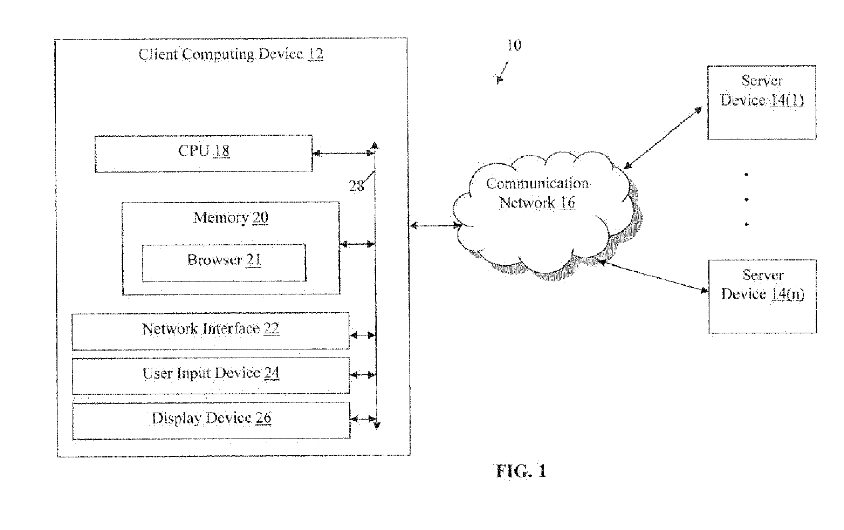

An exemplary environment 10 with a client computing device 12 which uses local storage in a browser to facilitate providing web search suggestions is illustrated in FIG. 1. In this example, the client computing device 12 is coupled to one or more server devices 14(1)-14(n) by a communication network 16, although other types and numbers of systems, devices, components, and/or elements in other topologies could be used. This technology provides a number of advantages including providing methods, non-transitory computer readable medium, and devices that more quickly and effectively provide web search suggestions.

Referring more specifically to FIG. 1, the client computing device 12 is a mobile phone, although other types and numbers of client computing devices may be used, such as computer tablets, laptop computers and desktop computers by way of example only. In this example, the client computing device 12 includes at least one processor or central processing unit (CPU) 18, a memory 20 with a browser 21, a network interface 22, a user input device 24, and a display device 26 which are coupled together by a bus 28 or other link, although other numbers and types of components, parts, devices, systems, and elements in other configurations and locations can also be used. Generally, the client computing device 12 may for example request and receive web pages and other web content from one or more of the server devices 14(1)-14(n) via the communication network 16 according to the HTTP-based protocol, for example, although the client computing device 12 can have and provide other types and numbers of functions and other operations. The processor 18 in the client computing device 12 may execute a program of stored instructions one or more aspects of the present invention, as described and illustrated by way of the embodiments herein, although the processor 18 could execute other numbers and types of programmed instructions.

The memory 20 in the client computing device 12 stores these programmed instructions for one or more aspects of the present invention as described and illustrated herein, although some or all of the programmed instructions could be stored and/or executed elsewhere. A variety of different types of memory storage devices, such as a RAM or a ROM in the system or a floppy disk, hard disk, CD ROM, DVD ROM, or other non-transitory computer readable medium which is read from and/or written to by a magnetic, optical, or other reading and/or writing system that is coupled to the processor 18, can be used for the memory 20 in the client computing device 12. In this example, the memory includes the browser 21 which may comprise any application configured to for example retrieve, present and/or traverse information resources and other content on the world wide web. With HTML 5, data, such as a web search suggestion file, can be locally stored within the browser 21, although other manners of obtaining local storage with the browser could be used.

The network interface 22 in the client computing device 12 is used to operatively couple and communicate between the client computing device 12 and the server devices 14(1)-14(n) via the communication network 16, although other types and numbers of networks with other types and numbers of connections and configurations can also be used.

The user input device 24 in the client computing device 12 can be used to input selections, such as a request for a particular web page or to enter data into a field of a web page, although the user input device could be used to input other types of requests and data and interact with other elements. The user input device in the client computing device 12 can include a keypad, touch screen, and/or vocal input processing system, although other types and numbers of user input devices can also be used.

The display device 26 in the client computing device 12 can be used to show data and other information to the user, such as a requested web page by way of example only. The display device 26 in in the client computing device 12 can be an LCD, LED, or OLED display, for example, although other types and numbers of displays could be used depending on the particular type of client computing device 12.

The communication network 16 can include one or more networks, such as one or more wide area networks (WANs), for example the Internet, and/or one or more local area networks (LANs). By way of example only, the communication network 16 can use TCP/IP over Ethernet and industry-standard protocols, including Hypertext transfer protocol (HTTP), secure HTTP (HTTPS), wireless application protocol (WAP), and/or SOAP, although other types and numbers of communication networks having their own communications protocols, can also be used.

The server devices 14(1)-14(n) may each one or more host applications, web services, and/or other data and content which may be requested and retrieved by the client computing device 12 via the communication network 16, although the server devices could each provide a wide variety of other types of functions and other operations.

In this example, each of the server devices 14(1)-14(n) includes at least one processor or a CPU, a memory, and a network interface, which are coupled together by a bus or other link, although one or more of server devices 14(1)-14(n) can include other numbers and types of systems, devices, components, or other elements in other configurations. The processor in each of the server devices 14(1)-14(n) can execute a program of instructions stored in the memory of each of the server devices 14(1)-14(n) for one or more aspects of the present invention as described and illustrated herein, although the processor could execute other numbers and types of programmed instructions.

The memory in each of the server devices 14(1)-14(n) stores these programmed instructions for one or more aspects of the present invention, as described and illustrated herein, although some or all of the programmed instructions could be stored and/or executed elsewhere. A variety of different types of memory storage devices, such as a RAM or a ROM in the system or a floppy disk, hard disk, CD ROM, or other non-transitory computer readable medium which is read from and/or written to by a magnetic, optical, or other reading and/or writing system that is coupled to processor can be used for the memory in each of the server devices 14(1)-14(n).

The network interface in each of the server devices 14(1)-14(n) is used to operatively couple and communicate between each of the server devices 14(1)-14(n) and the client computing device 12 via the communication network 16, although other types and numbers of communication networks with other types and numbers of connections and configurations can be used.

Although embodiments of the client computing device 12 and server devices 14(1)-14(n) are described and illustrated herein, each of the client computing device 12 and the server devices 14(1)-14(n) can be implemented on any suitable computer apparatus or computing device. It is to be understood that the apparatuses and devices of the embodiments described herein are for exemplary purposes, as many variations of the specific hardware and software used to implement the embodiments are possible, as will be appreciated by those skilled in the relevant art(s). Furthermore, each of the devices of the embodiments may be conveniently implemented using one or more general purpose computers, microprocessors, digital signal processors, and micro-controllers, programmed according to the teachings of the embodiments, as described and illustrated herein, and as will be appreciated by those ordinary skill in the art.

In addition, two or more computing apparatuses or devices can be substituted for any one of the devices in any embodiment described herein. Accordingly, principles and advantages of distributed processing, such as redundancy and replication also can be implemented, as desired, to increase the robustness and performance of the devices of the embodiments. The embodiments may also be implemented on computer apparatuses or devices that extend across any suitable network using any suitable interface mechanisms and communications technologies, including by way of example only telecommunications in any suitable form (e.g., voice and modem), wireless communications media, wireless communications networks, cellular communications networks, G3 communications networks, Public Switched Telephone Network (PSTNs), Packet Data Networks (PDNs), the Internet, intranets, and combinations thereof.

The examples may also be embodied as a non-transitory computer readable medium having instructions stored thereon for one or more aspects of the present technology as described and illustrated by way of the examples herein, as described herein, which when executed by a processor, cause the processor to carry out the steps necessary to implement the methods of the examples, as described and illustrated herein.

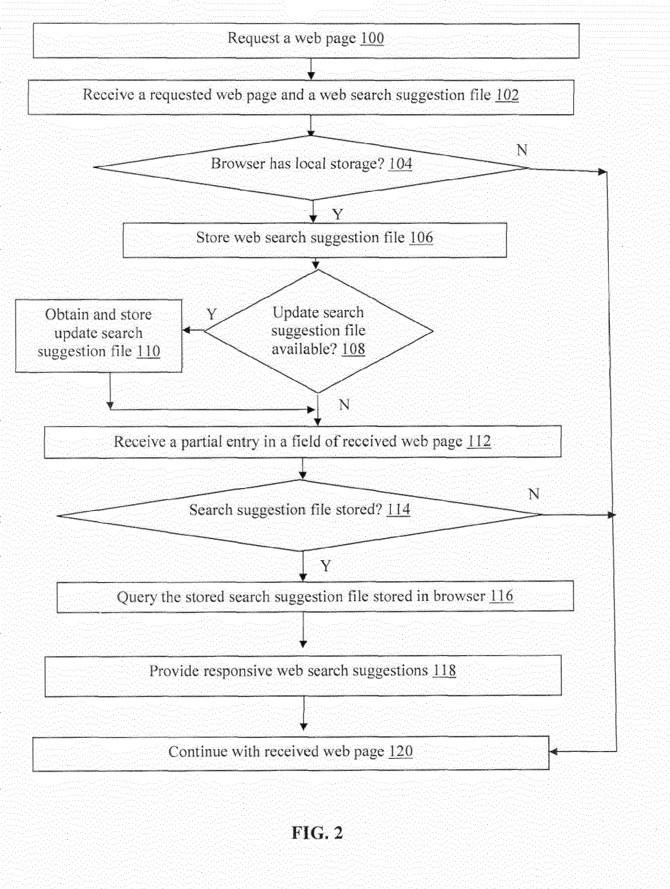

An exemplary method for using local storage in a client computing device 12 for one or more web search suggestions will now be described with reference to FIGS. 1-3B. In step 100, the client computing device 12 requests a web page of a web site from one of the server devices 14(1)-14(n), although other types of content could be request. The one of the web content server devices 14(1)-14(n) which hosts the web site responds with the requested web page as well as a current version of web search suggestion file for the web site which is received by the client computing device 12 in step 102.

In step 104, the requesting client computing device 12 determines whether the browser has local storage for the received version of the web search suggestion file. In this example, with HTML 5 the browser 21 in the requesting computing device 12 can provide local storage so the Yes branch is taken to step 106. In step 106, the received version of the web search suggestion file is stored locally within the browser 21 of the client computing device 12 and in this example without the use of a cookie, although other manners of storing locally within the browser 21 can be used. More specifically and by way of example only, once the web search suggestion file is downloaded to the client computing device 12, a set of records can be inserted in to one or more tables in a database in browser 21 to assist with future queries, although other manners for organizing and locally storing the web search suggestion file can be used. If in step 104, the requesting computing device 12 can not provide local storage, then the No branch is taken to step 120 where the user of the client computing device 12 can continue with any viewing or other interaction with the received web page.

In step 108, the requesting client computing device 12 may optionally determine whether to update any stored version of a web search suggestion file. By way of example only, the requesting client computing device 12 may adhere to a predefined and stored synchronization protocol for updating any stored version of a web search suggestion file, although other manners for maintaining updates of any locally stored web search suggestion file at the requesting one of the client computing devices can be used.

If in step 108 the requesting client computing device 12 determines to update any stored version of a web search suggestion file, then the Yes branch is taken to step 110. In step 110, the client computing device 12 will request and receive from the one of the server devices 14(1)-14(n) the updated web search suggestion file which is stored locally within the browser 21 in the client computing device 12. If in step 108 the requesting client computing device 12 determines not to update any stored version of a web search suggestion file, then the No branch is taken to step 112.

In addition to any optional periodic synchronization, anytime the client computing device 12 submits another request for a web page of the web site, the client computing device 12 may optionally perform a version check to compare the current locally stored version of the web search suggestion file for the web site against the version of the web search suggestion file for the web site at the one of the web content server devices 14(1)-14(n) which hosts the web site. If the versions do not match, then the new web search suggestion file may be requested and downloaded from the one of the web content server devices 14(1)-14(n) to the client computing device 12 updating the locally stored database instance in browser 21.

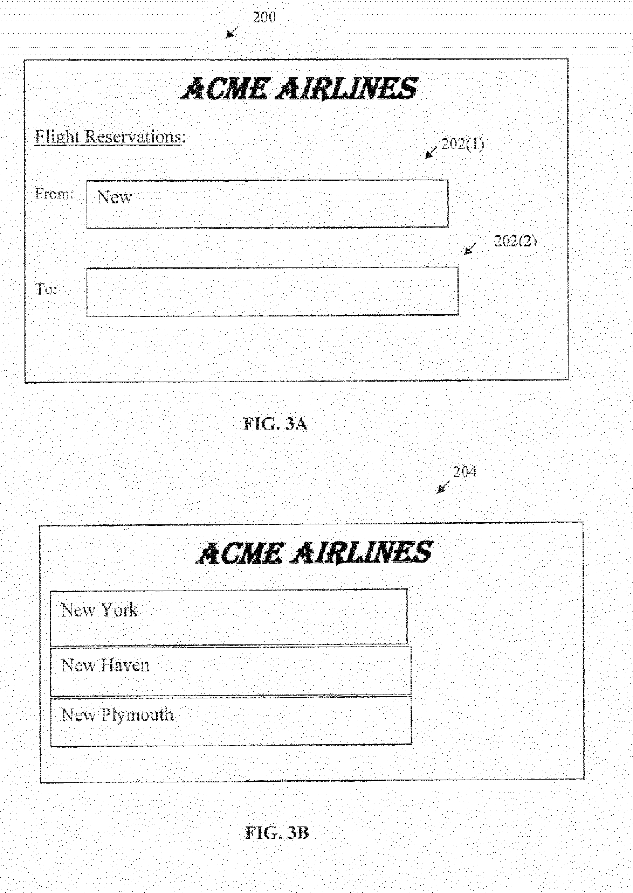

In step 112, text may be typed into a text field of a received web page using user input device 24, although other manners for making an entry in other locations of a web page could be used. By way of example only, the text of "New" is typed into a "From" text field 202(1) with a currently empty "To" text field 202(2) of a received web page 200 for "ACME Airlines" for making flight reservations as illustrated in FIG. 3A.

In step 114, when text is entered into a field of a received web page on display device 26 of the client computing device 12, such as the text of "New" in the "From" text field 202(1), then in this example a JavaScript code executes in the client computing device 12 to determine if a database instance of the web search suggestion file is in the local storage within browser 21, although other types of processes could be used. If in step 114, the client computing device 12 determines a database instance of the web search suggestion file is not stored in the local storage in browser 21, then the No branch is taken to step 120 as described earlier. If in step 114, the client computing device 12 determines a database instance of the web search suggestion file is stored in the local storage in browser 21, then the Yes branch is taken to step 116.

In step 116, in this example the client computing device 12 executes an SQL query to retrieve all the rows from the stored a database instance of the web search suggestion file within browser 21 containing the text that was entered, although other manners for querying the locally stored web search suggestion file could be used. More specifically, in this particular illustrative example two types of queries could be performed by the client computing device 12, although other types and numbers of queries could be utilized. One type of query retrieves all rows that include all words entered by the user at the client computing device 12 in the version of the web search suggestion file stored by utilizing HTML 5 functionalities. This is a simple query and can be used when the number of results is not high. For example, given the entry of the word "New" entered in the text field 202(1) in FIG.3A, the client computing device 12 would retrieve or suggest all text containing this string, which in this particular example might suggest for the text "New" in the text field 202(1) in the web page "New York", "New Haven", or "New Plymouth" as illustrated in FIG. 3B by way of example only

Another type of optional query retrieves all rows that include the string entered by the user at the client computing device 12. Accordingly, this type of query retrieves records that include the entered string entered in the version of the web search suggestion file stored at the client computing device 12 by utilizing HTML 5 functionalities. For example, given a string "soc" entered in a text field which is searched, the client computing device 12 might retrieve, group and suggest items, such as "soccer" (2) or "socks" (8), where the number in parenthesis represents the number of records including the previous string. This technique is more CPU intensive and time consuming, however it provides a better user experience at the client computing device 12 especially when applied to large catalogs or other data.

In step 118, the client computing device 12 provides the suggestions identified from the locally stored web search suggestion file for the text field 202(1) as illustrated in FIG. 3B in this example, although other manners for providing the suggestions could be used. In step 120, the client computing device 12 can continue to view and interact with the web page on the display device 26.

Accordingly, as illustrated and described with the examples herein this technology provides methods, non-transitory computer readable medium, and devices that more quickly and effectively provide web search suggestions. In these examples this technology uses the local storage capabilities provided by HTML5 at the client computing device. With this technology, the process of predicting words or phrases can be applied directly and efficiently in the browser of the client computing device.

Having thus described the basic concept of the invention, it will be rather apparent to those skilled in the art that the foregoing detailed disclosure is intended to be presented by way of example only, and is not limiting. Various alterations, improvements, and modifications will occur and are intended to those skilled in the art, though not expressly stated herein. These alterations, improvements, and modifications are intended to be suggested hereby, and are within the spirit and scope of the invention. Additionally, the recited order of processing elements or sequences, or the use of numbers, letters, or other designations therefore, is not intended to limit the claimed processes to any order except as may be specified in the claims. Accordingly, the invention is limited only by the following claims and equivalents thereto.

## Claims

1. A method for providing one or more web search suggestions, the method comprising:
receiving, by a client computing device, at least a partial entry in field of a web page;
providing, by the client computing device, in the field of the web page any responsive web search suggestion entries to the received at least a partial entry from a web search suggestion file stored in a web browser of the client computing device.

2. The method of claim 1 further comprising determining, by the client computing device, whether the web search suggestion file is stored in the web browser of the client computing device, wherein the providing in the field of the web page any responsive web search suggestion entries occurs when the determining indicates the web search suggestion file is stored in the web browser of the client computing device.

3. The method as set forth in claim 2 further comprising:
determining, by the client computing device, whether the web search suggestion file stored in the web browser has an updated version; and
obtaining and storing, by the client computing device, the updated version in the web browser at the client computing device when the determining indicates the update version is available.

4. The method as set forth in claim 1 further comprising utilizing, by the client computing device, HTML5 to store the web search suggestion file in the web browser of the client computing device.

5. The method as set forth in claim 1 wherein the providing further comprises:
obtaining, by the client computing device, any responsive web search suggestion entries to the at least a partial entry from the web search suggestion file;
grouping, by the client computing device, any of the obtained responsive web search suggestion entries based on at least one common characteristic; and
providing, by the client computing device, the grouped responsive web search suggestion entries with a number in each group corresponding to a number of the responsive web search suggestion entries.

6. A non-transitory computer readable medium having stored thereon instructions for providing one or more web search suggestions comprising machine executable code which when executed by at least one processor, causes the processor to perform steps comprising:
receiving at least a partial entry in field of a web page; and
providing in the field of the web page any responsive web search suggestion entries to the received at least a partial entry from a web search suggestion file stored in a web browser of the client computing device.

7. The medium of claim 6 further comprising determining whether the web search suggestion file is stored in the web browser of the client computing device, wherein the providing in the field of the web page any responsive web search suggestion entries occurs when the determining indicates the web search suggestion file is stored in the web browser of the client computing device.

8. The medium as set forth in claim 7 further comprising:
determining whether the web search suggestion file stored in the web browser has an updated version; and
obtaining and storing the updated version in the web browser at the client computing device when the determining indicates the update version is available.

9. The medium as set forth in claim 6 further comprising utilizing HTML5 to store the web search suggestion file in the web browser of the client computing device.

10. The medium as set forth in claim 6 wherein the providing further comprises:
obtaining any responsive web search suggestion entries to the at least a partial entry from the web search suggestion file;
grouping any of the obtained responsive web search suggestion entries based on at least one common characteristic; and
providing the grouped responsive web search suggestion entries with a number in each group corresponding to a number of the responsive web search suggestion entries.

11. A computing device comprising:
one or more processors;
a memory coupled to the one or more processors which are configured to execute programmed instructions stored in the memory comprising:
receiving at least a partial entry in field of a web page; and
providing in the field of the web page any responsive web search suggestion entries to the received at least a partial entry from a web search suggestion file stored in a web browser of the client computing device.

12. The device as set forth in claim 11 wherein the memory coupled to the one or more processors is further configured to execute programmed instructions stored in the memory further comprising determining whether the web search suggestion file is stored in the web browser of the client computing device, wherein the providing in the field of the web page any responsive web search suggestion entries occurs when the determining indicates the web search suggestion file is stored in the web browser of the client computing device.

13. The device as set forth in claim 12 wherein the memory coupled to the one or more processors is further configured to execute programmed instructions stored in the memory further comprising:
determining whether the web search suggestion file stored in the web browser has an updated version; and
obtaining and storing the updated version in the web browser at the client computing device when the determining indicates the update version is available.

14. The device as set forth in claim 11 wherein the memory coupled to the one or more processors is further configured to execute programmed instructions stored in the memory further comprising utilizing HTML5 to store the web search suggestion file in the web browser of the client computing device.

15. The device as set forth in claim 11 wherein the memory coupled to the one or more processors is further configured to execute programmed instructions stored in the memory for the providing further comprises:
obtaining any responsive web search suggestion entries to the at least a partial entry from the web search suggestion file;
grouping any of the obtained responsive web search suggestion entries based on at least one common characteristic; and
providing the grouped responsive web search suggestion entries with a number in each group corresponding to a number of the responsive web search suggestion entries.
